# EUROPÄISCHE PATENTSCHRIFT

(11) **EP 1 429 406 B1**
(45) Veröffentlichungstag und Bekanntmachung des Hinweises auf die Patenterteilung: **21.06.2006**
(21) Anmeldenummer: 02027645.7
(22) Anmeldetag: 11.12.2002
(51) Int. Cl.: H01M 8/02, H01M 8/24

(54) **Rahmenelemente für monopolare Brennstoffzellenstacks**
Frame elements for monopolar fuel cell stacks
Elements d'encadrement pour assemblage monopolaire de piles à combustible

(43) Veröffentlichungstag der Anmeldung: 16.06.2004
(73) Patentinhaber: SFC Smart Fuel Cell GmbH, 85649 Brunnthal-Nord (DE)
(72) Erfinder: Huber, Markus, 85567 Grafing (DE); Müller, Jens, Dr., 81827 München (DE); Ruf, Christian, 80636 München (DE)
(74) Vertreter: Grünecker, Kinkeldey, Stockmair & Schwanhäusser Anwaltssozietät

(56) Entgegenhaltungen:
- WO-A-02/17417
- WO-A-99/57781

## Beschreibung

Die Erfindung betrifft Rahmenelemente für monopolare Brennstoffzellenstacks, die zusammen mit speziellen Plattenelementen eine einfachere elektrische Verschaltung und/oder eine einfachere und verbesserte Montage von monopolaren Brennstoffzellenstacks ermöglichen.

### Stand der Technik

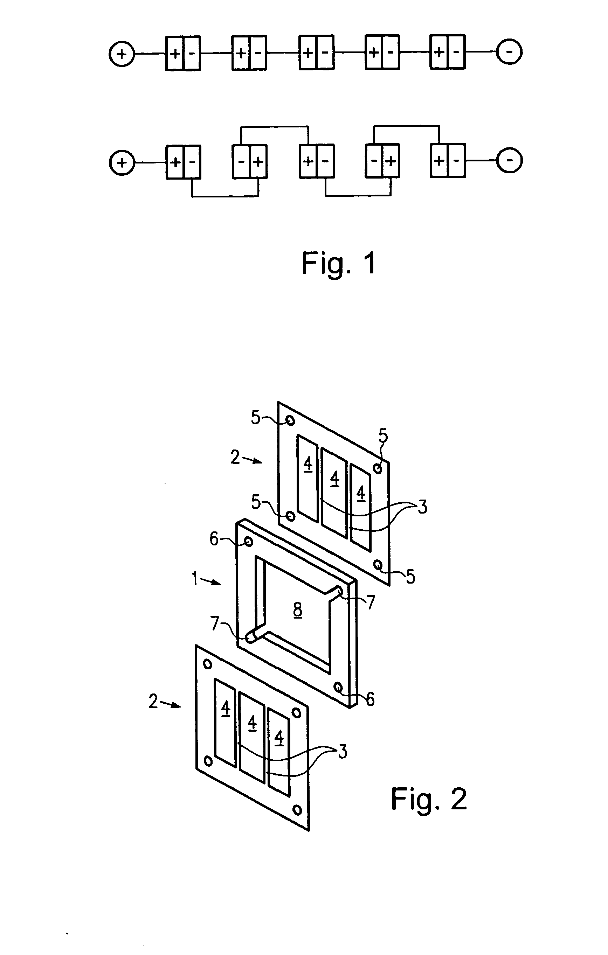

Durch das Aufkommen von Bipolarplatten sind monopolare Brennstoffzellenstackanordnungen wegen ihrer komplizierteren Verschaltung gegenüber bipolaren Anordnungen stark ins Hintertreffen geraten. Diese soll nachfolgend unter Bezugnahme auf Fig. 1 anhand der prinzipiellen Unterschiede zwischen einer Bipolaranordnung und einer Monopolaranordnung erläutert werden.

Fig. 1 zeigt schematische Ersatzschaltbilder von zwei äquivalenten Reihenschaltungen von einzelnen Spannungszellen, wobei die obere Teilfigur einer Bipolaranordnung und die untere Teilfigur einer Monopolaranordnung entspricht. Bei der Bipolaranordnung sind die Spannungszellen so orientiert, dass sich jeweils ein Pluspol und ein Minuspol gegenüberliegen, was eine einfache Verschaltung der Spannungszellen erlaubt. Dagegen sind bei der Monopolaranordnung die Zellen so ausgerichtet, dass sich paarweise jeweils zwei Pluspole oder zwei Minuspole gegenüberliegen. Um hier die einzelnen Spannungszellen in Reihe zu schalten, ist eine vergleichsweise umständliche Verschaltung notwendig, was teilweise erklärt, dass die Bipolaranordnung vielfach stark bevorzugt wurde/wird.

Dessen ungeachtet hat die Monopolaranordnung aber durchaus auch Vorteile gegenüber der Bipolaranordnung. Diese sollen nachfolgend erläutert werden:

Bei Bipolarstacks wird der Kathodenbereich einer Einzelzelle gegenüber dem Anodenbereich der unmittelbar benachbarten Einzelzelle durch eine Trennplatte (Bipolarplatte) abgegrenzt. Diese Trennplatten machen beim Stack einen beträchtlichen Anteil des Stackgesamtvolumens aus, der auf das Stackvolumen bezogene charakteristische Größen wie Leistung etc. herabsetzt. Dieser Nachteil tritt bei einem Monopolarstack nicht auf, da hier zwei benachbarte Einzelzellen einen gemeinsamen Anodenbereich oder Kathodenbereich aufweisen können. Zwar müssen die beiden Anoden bzw. Kathoden eines solchen gemeinsamen Anodenbereichs bzw. Kathodenbereichs elektrisch gegeneinander isoliert sein, die Fluidbereiche selbst müssen aber nicht getrennt sein, solange die elektrische Leitfähigkeit der Kathoden- und Anodenfluide vernachlässigbar bleibt, was (trotz einer gewissen Leitfähigkeit, insbesondere des Anodenfluids,) in der Regel der Fall ist.

Die elektrische Verschaltung von Monopolarstacks erfolgt gemäß dem Stand der Technik entweder über direkte Kontaktierung der Stromableiter durch Verlöten ("direktes Aneinanderlöten"), oder durch aufgesetzte Kontaktklemmen. Verspannung des Stacks erfolgt über die Endplatten per Schrauben, Spannbänder oder ähnliches. Dadurch werden gemäß Stand der Technik für einen Stack Stromableiter unterschiedlicher Geometrien oder eine aufwendige Verkabelung benötigt. Dies ist sehr montageunfreundlich, anfällig für Montagefehler und kostenintensiv (z.B. werden mehrere Stanzwerkzeuge für unterschiedliche Stromableiter benötigt). Zusätzlich sind die bisherigen Ausführungen nicht für miniaturisierte Brennstoffzellensysteme geeignet, weil sie viel Bauraum benötigen. Bei der üblichen Verspannung des Stacks durch Schrauben benötigt man eine erhebliche Mindestdicke der Endplatten, um ausreichend tiefe Gewindebohrungen zu realisieren. Auch bei anderen Techniken, z.B. Verspannung über Spannbänder, müssen die Endplatten sehr hohe Kräfte aufnehmen und benötigen daher auch aus Stabilitätsgründen eine gewisse Dicke. Im Ergebnis sind bisherige Verspannungstechniken schwer und großvolumig und damit für miniaturisierte Brennstoffzellensysteme wenig geeignet.

### Beschreibung der Erfindung

Es ist eine Aufgabe der vorliegenden Erfindung, Rahmenelemente bereitzustellen, mit denen die oben beschriebenen Nachteile der monopolaren Anordnung von Brennstoffzellenstacks, insbesondere die Probleme bei der Fertigung des Stacks, vermieden werden.

Es ist ferner eine Aufgabe der Erfindung, das Verspannen von Brennstoffzellenstacks zu vereinfachen und zu verbessern.

Diese Aufgaben werden durch die erfindungsgemäßen Rahmenelement mit den Merkmalen des Anspruchs 1 und das Verfahren mit den Schritten des Anspruchs 7 gelöst.

Vorteilhafte Weiterbildungen sind in den Unteransprüchen angegeben. Besonders bevorzugte Ausführungsformen werden unter Bezugnahme auf die beigefügten Figuren beschrieben.

Das erfindungsgemäße Rahmenelement umfasst eine Vielzahl von Vertiefungen zur Aufnahme von Rippen von Plattenelementen, die zu einem Stack angeordnet sind, insbesondere von erfindungsgemäßen Plattenelementen, und/oder eine Vielzahl von Perforationen zur Durchführung von Rippen der zu dem Stack angeordneten Plattenelemente.

Das Rahmenelement ist im wesentlichen ebenfalls plattenförmig. Der Wortstamm "-platte-" wurde bei der Namensgebung lediglich deshalb weggelassen, um eine Verwechslung mit den Plattenelementen zu vermeiden, die in gestapelter Anordnung den Stack bilden.

Abhängig von der Ausbildung der Rahmenelemente können für den Aufbau des Stacks auch zwei verschiedene Rahmenelemente bereitgestellt werden, wobei die (primäre oder einzige) Aufgabe des einen Typs die mechanische Verspannung des Stacks, die (primäre oder einzige) Aufgabe des anderen Typs die elektrische Verschaltung des Stacks ist.

Es kann aber auch nur ein Typ von Rahmenelementen erforderlich sein, der sowohl für die elektrische Verschaltung hilfreich ist, als auch den Zusammenbau des Stacks vereinfacht und gegebenenfalls seine mechanischen Eigenschaften (Festigkeit, Dichtigkeit, etc.) fördert.

Falls im Rahmenelement sowohl Vertiefungen, als auch Perforationen vorgesehen sind, dienen die Vertiefungen im Rahmenelement bevorzugt der mechanischen Verspannung des Stacks, während die Perforationen im Rahmenelement bevorzugt der elektrischen Verschaltung des Stacks dienen. Die Rippen werden von einer Seite des Rahmenelements durch die Perforationen durchgeführt, so dass sie an der anderen Seite des Rahmenelements vorstehen. Hier können sie gemäß den Anforderungen der Monopolarverschaltung miteinander elektrisch leitend verbunden werden.

Die erfindungsgemäßen Rahmenelemente werden zusammen mit speziell ausgebildeten Plattenelementen verwendet, die der Fluidführung in den Einzelzellen eines Stacks (gegebenenfalls auch senkrecht dazu, d.h. in Stackrichtung) dienen. Die erfindungsgemäßen Rahmenelemente dienen der elektrischen Verschaltung und/oder der Montage einer Vielzahl von Plattenelementen, die zu einem Stack angeordnet sind. Sowohl Platten- als auch Rahmenelemente haben im Allgemeinen in einer Raumrichtung deutlich kleinere Abmessungen als in den zwei dazu senkrechten Raumrichtungen. Sie können ausgehend von unstrukturierten, plattenförmigen Grundmaterialen einfach und preiswert hergestellt werden, da ihre Strukturierung durch leicht automatisierbare Vorgänge wie Stanzen, Prägen, Fräsen, Photolithographie etc. erfolgen kann.

Zur Vereinfachung der elektrischen Verschaltung von Monopolarstacks ist ferner eine Ausbildung der Plattenelemente von Vorteil, die bei deckungsgleicher Überlagerung der Grundrisse zweier Plattenelemente wenigstens eine Anordnung ermöglicht, bei der die Rippen der beiden übereinander gelagerten Plattenelemente gegeneinander versetzt sind. Dadurch können die Plattenelemente so gestapelt werden, dass die elektrische Verschaltung mit jeweils übernächsten Nachbarn vereinfacht möglich ist.

Für die Funktionsfähigkeit des Monopolarstack ist es entscheidend, dass im zusammengesetzten Stack die beiden Anoden eines Anodenbereichs bzw. Kathoden eines Kathodenbereichs nicht miteinander elektrisch leitend verbunden sind.

Solche Bereiche können durch paarweise ausgerichtete elektrisch leitende Plattenelemente gebildet werden, die durch eine entsprechend strukturiere elektrisch isolierende Schicht gegeneinander isoliert sind, was beispielsweise auf einfache Weise dadurch erreicht werden kann, das einseitig isolierend beschichtete Metallplatten (oder isolierende Platten, die einseitig metallisch beschichtet sind) zur Herstellung der Plattenelemente verwendet werden.

Wie später erläutert wird, werden vorzugsweise Plattenelemente mit zwei elektrisch leitenden Oberflächenschichten, die durch eine Zwischenschicht gegeneinander isoliert sind, verwendet. Ein einzelner Anodenbereich (bzw. Kathodenbereich), der die Anoden (bzw. Kathoden) zweier aneinander angrenzender Zellen umfasst, kann dann durch ein einziges Plattenelement gebildet werden, das einen isolierenden Kern aufweist und zu beiden Seiten elektrisch leitend beschichtet ist, wobei diese elektrisch leitend Schichten gegeneinander isoliert sind.

Diese Plattenelemente können also aus laminierten Ausgangsplatten vom Typ leitend-isolierend oder vom Typ leitend-isolierend-leitend hergestellt werden. Sie können aber auch aus leitenden (metallischen) Ausgangsplatten hergestellt werden, die erst nach der Strukturierung isolierend beschichtet (z.B. lackiert) werden, oder aus isolierenden Ausgangsplatten hergestellt werden, die erst nach der Strukturierung elektrisch leitend beschichtet werden (z.B. durch Aufdampfen).

Die Fertigung von Monopolarstacks kann noch weiter vereinfacht werden, wenn Stackbaueinheiten bereit gestellt werden, die eine MEA-Plattenelement-Kombination umfassen, wobei eine Membran-Elektroden-Einheit (MEA) mit einer leitfähigen Seite eines Plattenelements verbunden ist. Alternativ können als Stackbaueinheiten auch MEA-Plattenelement-MEA-Kombinationen verwendet werden, die dann in alternierender Reihenfolge zusammen mit einfachen Plattenelementen den Stack zum Aufbau des Stacks verwendet werden könne. Durch die vor dem Aufbau des Stacks erfolgte Verbindung von MEA und Plattenelement kann eine höhere Dichtigkeit, eine präzisere Anordnung, ein geringerer Innenwiderstand und nicht zuletzt eine höhere mechanische Stabilität als bei Verwendung von Einzelelementen erreicht werden.

Zur Vereinfachung der elektrischen Verschaltung des Stacks weist das Rahmenelement vorzugsweise auf einer Seite eine bereichsweise elektrisch leitfähige Struktur aufweist, die eine monopolare Verschaltung der zu dem Stack angeordneten Plattenelemente unterstützt. Im einfachsten Fall müssen die ein- oder durchgeführten Rippen der Plattenelemente nur noch mit dem jeweils angrenzenden Abschnitt der elektrisch leitfähigen Struktur verlötet werden, um die monopolare Verschaltung zu erreichen.

Die bereichsweise elektrisch leitfähige Struktur kann durch Ausbilden eines regelmä-βigen zweidimensionalen Musters von leitfähigen und isolierenden Bereichen erreicht werden, was die vorteilhafte Verwendung von Leiterplatten und Lithographietechniken ermöglicht. In diesem Fall kann auch das elektrische Verbinden zwischen den der Stromführung dienenden Rippen der Rahmenelemente und den leitfähigen Bereichen auf einfache Weise automatisiert werden. Gegebenenfalls ist auch die komplette Montage und Verschaltung des Monopolarstacks automatisierbar.

Vorzugsweise umfasst das Rahmenelement Montageeinrichtungen für zwei Stackabschlussplatten, die den Stack von Plattenelementen beidseitig abschließen. Beispielsweise kann dann durch Vorspannen der gestapelten Anordnung von Plattenelementen (und Dichtungen, MEAs) mittels der beidseitig vorzusehenden Stackabschlussplatten eine fluiddichte Monopolaranordnung bereitgestellt werden, die durch Verbinden der Montageeinrichtungen des Rahmenelements mit entsprechenden Einrichtung der Endplatten in die mechanisch stabile Endform des Stacks übergebracht werden kann. Dies kann im einfachsten Fall durch einfaches Aufsetzen der erfindungsgemäßen Rahmenelemente auf die Rippen der erfolgen, wie später anhand eines besonders bevorzugten Ausführungsbeispiels erläutert wird.

In einer vorteilhaften Weiterbildung umfasst das erfindungsgemäße Rahmenelement wenigstens einen Kanal zur Fluidführung entlang einer Stackachse des Monopolarstacks. Diese Weiterbildung ist dann vorteilhaft, wenn die Plattendicke des Rahmenelements für eine Fluidführung ausreichend groß ist, so dass ein Kanal in das Rahmenelement geprägt oder gefräst (offene Rinne) oder gebohrt (Bohrung) werden kann. Eine Bohrung kann auch dadurch erreicht werden, wenn das Rahmenelement aus zwei Halbelementen mit geeignet ausgerichteten Rinnen zusammengesetzt wird.

Das erfindungsgemäße Verfahren zur Herstellung eines Brennstoffzellenstacks umfasst die Schritte: Anordnen von Plattenelementen in einer Stackanordnung; Vorspannen der Plattenelemente; seitliches Aufsetzen von erfindungsgemäßen Rahmenelementen auf den Stack, so dass die Vertiefungen und/oder die Perforationen der Rahmenelemente Rippen der Plattenelemente aufnehmen; und Aufheben der Vorspannung.

Die Vertiefungen und/oder die Rippen nehmen beim Aufheben der Vorspannung die Vorspannungskräfte wenigstens teilweise auf. Dieser Effekt und die gesamte mechanische Stabilität kann noch verbessert werden, wenn vor dem Aufheben der Vorspannung ein Verlöten der Rippen der Plattenelemente mit den Rahmenelementen durchgeführt wird.

Nachfolgend wird die Erfindung anhand von Beispielen und von besonders bevorzugten Ausbildungsformen der erfindungsgemäßen Elemente unter Bezugnahme auf die beigefügten Figuren beschrieben.

Es zeigen:
- Fig. 1: den qualitativen Unterschied bei der elektrischen Verschaltung bei einer bipolaren und einer monopolaren Anordnung;
- Fig. 2: eine Fluidkammer für eine Monopolaranordnung gemäß dem Stand der Technik;
- Fig. 3: eine Explosionsdarstellung eines Monopolarstacks (in Stackrichtung betrachtet), der aus Plattenelementen und erfindungsgemäßen Rahmenelementen aufgebaut ist;
- Fig. 4: Aufsichten (unten) auf die zwei in Fig. 3 verwendeten erfindungsgemäßen Rahmenelemente und die dazugehörigen Ansichten der Querschnitte (oben);
- Fig. 5: ein weiteres Plattenelement, das zusammen mit den erfindungsgemäßen Rahmenelementen verwendbar ist;
- Fig. 6: eine Aufsicht (oben) auf ein erfindungsgemäßes Rahmenelement, das zusammen mit dem die in Fig. 3 verwendbar ist, und die dazugehörigen Ansichten der Querschnitte (unten) an zwei verschiedenen Positionen entlang der Längsrichtung des Rahmenelements;
- Fig. 7: ein weiteres Plattenelement, das zusammen mit den erfindungsgemäßen Rahmenelementen zum Aufbau eines Monopolarstacks verwendbar ist;
- Fig. 8: ein erfindungsgemäßes Rahmenelement, das zusammen mit dem in Fig. 7 skizzierten Plattenelement zum Aufbau eines Monopolarstacks verwendbar ist;
- Fig. 9: eine Darstellung eines unvollständigen Monopolarstacks mit den in den Figuren 7 und 8 skizzierten Platten- und Rahmenelementen;
- Fig. 10: eine Explosionsdarstellung des Monopolarstacks von Fig. 9;
- Fig. 11: alternative Leitfähigkeitsstrukturen für das erfindungsgemäße Rahmenelement von Fig. 8.

Fig. 1 stellt die prinzipiellen Unterschiede der elektrischen Verschaltung (Reihenschaltung) von Einzelzellen in bipolarer Anordnung (oben) und monopolarer Anordnung (unten) heraus. Sie wurde im Detail bereits einleitend beschrieben, so dass sich eine Wiederholung erübrigt.

Fig. 2 zeigt einen Ausschnitt aus einem Monopolarstack gemäß dem Stand der Technik, wie er in ähnlicher Form beispielsweise in der DE 100 40 654 A1 beschrieben ist. Dort sind auch Einrichtungen zur Montage und elektrischen Verschaltung des Stacks beschrieben, die in Fig. 2 der vereinfachten Darstellung zuliebe nicht dargestellt sind.

Ein elektrisch isolierender Rahmen 1 ist sandwich-artig zwischen zwei Stromabnehmern 2 angeordnet. Die Stromabnehmer wiederum grenzen an (in der Figur nicht abgebildete) Elektrolyteinrichtungen (MEA). Die Stromabnehmer 2 dienen der Stromabfuhr an der Grenzfläche MEA-Stromabnehmer, sollen aber gleichzeitig Kontaktfläche des Anodenfluids mit der MEA nicht nennenswert verringern: daher wird der Innenbereich eines Stromabnehmers 2 mit dünnen Querstegen 3 überbrückt, die für eine Stromabfuhr ausreichend breit und zahlreich sind, dabei aber so schmal sind, dass die durch die Perforationen 4 definierte aktive Kontaktfläche des Fluids mit der MEA nicht substantiell verringert wird.

Zur Strömungsführung entlang der Stapelachse sind im Rahmenbereich (hier in den Ecken) der Stromableiter vier Bohrungen 5 vorgesehen, wobei jeweils zwei diametral gegenüberliegende Bohrungen der Führung des Anodenfluids bzw. des Kathodenfluids dienen. Entsprechende Bohrungen 6, 7 sind auch im Rahmen 1 vorgesehen. Die Bohrungen 7 stehen über Durchbrüche mit dem Innenbereich 8 des Rahmens 1 in Verbindung. Die Zufuhr von Anodenfluid in den Innenbereich 8 erfolgt über eine der beiden Bohrungen 7, die Abfuhr durch die andere, diametral gegenüberliegende Bohrung 7. Der Innenbereich 8 stellt das Hauptvolumen der Anodenkammer der gezeigten Zelle dar, da die Dicke des Rahmens 1 deutlich höher ist als die der Stromabnehmer 2.

Die hier für die Anodenkammer gemachten Aussagen gelten entsprechend auch für die Kathodenkammer. Bei einer Kathodenkammer hat der zentrale Rahmen Perforationen an den beiden anderen diametralen Fluiddurchführungen. Hierzu muss der skizzierte Typ von Rahmen 1 nur verdreht werden und in alternierender Reihenfolge gestapelt werden, so dass nur ein Typ von Rahmen zum Aufbau des Stacks erforderlich ist.

Wie schon erwähnt, sind in Fig. 2 keine Einrichtungen zur Montage und elektrischen Verschaltung des Stacks abgebildet. Zum Zwecke der elektrischen Verschaltung weist gemäß der DE 100 40 654 A1 jeder isolierende Rahmen einen Durchbruch und jeder Stromabnehmer jeweils einen Durchbruch und eine aus der Ebene ausgeklappte leitfähige Lasche auf. Diese Durchbrüche und Laschen wirken im Stack so zusammen, dass eine der Fig. 1, unteres Teilbild, entsprechende monopolare Verschaltung des Stacks gewährleistet ist.

Für die Beschreibung der Erfindung werden nachfolgend nur die erfindungswesentlichen Merkmale skizziert. Insbesondere werden der Einfachheit halber keine MEA-Einheiten dargestellt. Für auf dem Gebiet der Technik heimische Fachleute versteht sich dabei von selbst, dass diese Einheiten zur Ausbildung einer Einzelzelle jeweils zwischen Anode und Kathode vorzusehen sind. Dies kann beim Zusammenbau des Stacks erfolgen, aber auch dadurch, dass anstelle von einfachen Plattenelementen schon vor dem Zusammenbau Baueinheiten aus Plattenelement und MEA-Einheit bereitgestellt werden.

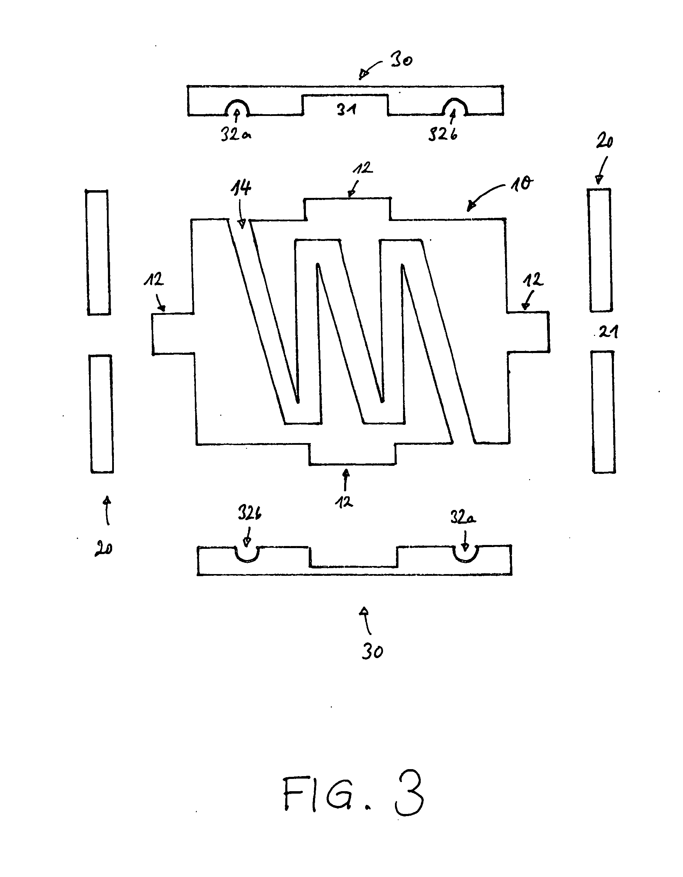

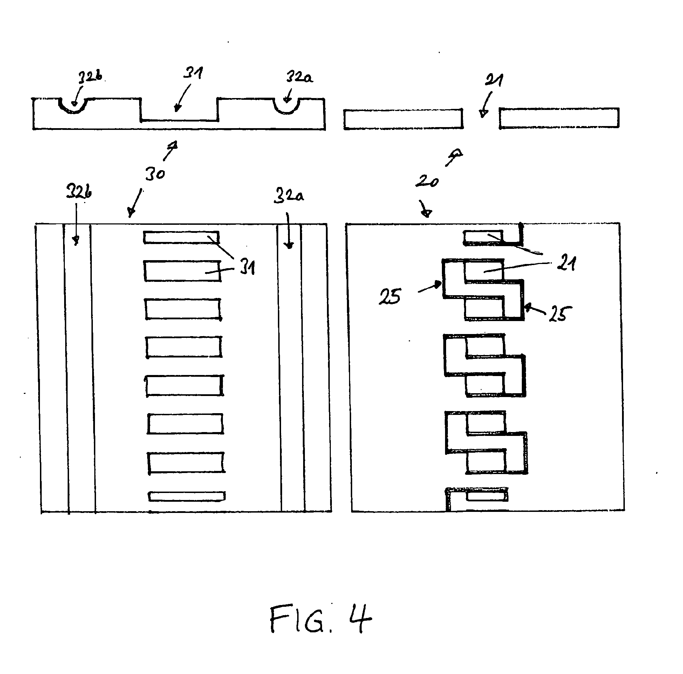

Es werden nun die beiden Figuren 3 und 4 beschrieben.

Fig. 3 zeigt eine Explosionsdarstellung eines Monopolarstacks, der aus Plattenelementen und erfindungsgemäßen Rahmenelementen aufgebaut ist.

Die Blickrichtung entspricht der Stackrichtung, so dass nur ein Plattenelement 10 (in Aufsicht) sichtbar ist. Fig. 4 zeigt die zwei verschiedenen erfindungsgemäßen Rahmenelemente 20, 30, die bei der Anordnung von Fig. 3 verwendet werden, in Aufsichten (unten) und die dazugehörigen Ansichten der Querschnitte (oben).

Das Plattenelement umfasst eine Strömungsführungsstruktur in der durch das Plattenelement definierten Ebene und wenigstens eine Rippe, die sich in der durch das Plattenelement definierten Ebene von einem Seitenbereiche des Plattenelements nach außen erstreckt.

Die Strömungsführungsstruktur kann beispielsweise durch eine zusammenhängende Perforationsstruktur gebildet werden, die eine Vielzahl nebeneinander (beispielsweise parallel) verlaufender Kanäle oder aber auch einen einzelnen mäandernden Kanal darstellt. Die Rippen dienen entweder zur Montage des Monopolarstacks, oder zur elektrischen Verschaltung des Monopolarstacks. Sie können bevorzugt aber auch beiden Zwecken gleichzeitig dienen.

Der durch den Seitenbereich des Plattenelements (d.h. ohne Rippen) definierte Grundriss des Plattenelements ist im Hinblick auf eine einfache Montage bevorzugt rechteckig. Unter Umständen können aber auch eine Sechs- oder Achteckform vorteilhaft sein. Entscheidend ist, dass für das Plattenelement wenigstens zwei unterschiedliche Orientierungen (für Anode und Kathode) mit deckungsgleichen Grundrissen existieren.

Im Falle einer einzigen Rippe dient diese - im Zusammenwirken mit dem erfindungsgemäßen Rahmenelement - primär der elektrischen Verschaltung des Monopolarstacks. Sie kann aber auch zur Vereinfachung der Montage und gegebenenfalls zur Erhöhung der Stabilität des zusammengebauten Stacks beitragen. Bei mehreren Rippen kann diesbezüglich auch eine Aufgabenteilung erfolgen, so dass eine Rippe (oder mehrere Rippen) zur elektrischen Verschaltung, eine andere Rippe (oder mehrere andere Rippen) zur Erhöhung der mechanischen Stabilität verwendet werden. Für beide Aspekte - Stromführung und mechanische Festigkeit - ist es vorteilhaft, wenn das Plattenelement wenigstens zwei Rippen aufweist, die sich in der durch das Plattenelement definierten Ebene von unterschiedlichen, bevorzugt gegenüberliegenden, Seitenbereichen des Plattenelements nach außen erstrecken.

Das Plattenelement 12 wird durch einen mäandernden Kanal 14 in zwei Halbplatten unterteilt. Zur räumlichen Fixierung der Halbplatten sind an verschiedenen Seiten Rippen 12 vorgesehen, die durch entsprechende Aussparungen 21, 31 von Rahmenelementen 20, 30 aufgenommen werden.

Bei dem vorliegenden Ausführungsbeispiel dient das Rahmenelement 20, das in Aufsicht in Figur 4 (unten rechts) abgebildet ist, primär der elektrischen Verschaltung des Monopolarstacks. Der Stack wird im vorliegenden Beispiel durch zwei einzelne Plattenelemente 10 am Stackende und sechs dazwischen vorgesehenen Paaren von Plattenelementen 10 gebildet. Die in Figur 3 seitlich vorgesehenen Rippen 12 dienen der elektrischen Verschaltung und durchstoßen die Perforationen (Aussparungen) 21 der seitlich vorgesehenen Rahmenelemente 20, und zwar einzeln in den beiden endseitig vorgesehenen Perforationen 21 und paarweise dazwischen. Sie werden mit Leiterbahnabschnitten 25 verlötet (die einzelnen Leiterbahnabschnitte 25 haben untereinander keinen Kontakt), und bewirken dadurch eine elektrische Verschaltung, die der in Figur 1 unten gezeigten entspricht. Ein Nebeneffekt dieses Verlötens ist die Erhöhung der mechanischen Festigkeit des Stackaufbaus.

Die oben und unten vorgesehenen Rahmenelemente 30 dienen der mechanischen Stabilität, sowie dem Fluidtransport entlang der Stackachse, und der Fluidzufuhr- bzw. -abfuhr in die Kanäle 14 bzw. aus den Kanälen 14 der Anoden- bzw. Kathodenbereiche. Zur leichteren Fertigung und Erhöhung der mechanischen Stabilität sind in den Rahmenelementen 30 Vertiefungen 31 vorgesehen, in die die oben und unten vorgesehenen Rippen 12 des Plattenelements 10 eingesetzt werden können. Zur Führung des Anodenfluids bzw. Kathodenfluids sind zwei Rinnen 32a (für die Anoden) bzw. 32b (für die Kathoden) vorgesehen, die mit den Enden der Kanäle 14 ausrichtbar sind. Das Plattenelement 10, das in Figur 3 skizziert ist, stellt in dieser Orientierung demzufolge einen Anodenbereich dar. Für die Verwendung bei Kathoden wird sie in einer Orientierung verwendet, bei der es um die horizontale oder vertikale Mittelachse um 180° gedreht ist.

Die in Figur 4 gezeigten Rahmenelemente 20, 30 werden für eine Ausbildung der Plattenelemente 10 verwendet, bei der letztere zur Ausbildung eines Anodenbereichs mit zwei Anoden (bzw. Kathodenbereichs mit zwei Kathoden) paarweise verwendet werden.

Bei einer Verwendung von Rahmenelementen entsprechend der Strukturierung von Figur 3, aber mit beidseitig leitenden Oberflächen, würden für jedes Anodenpaar und jedes Kathodenpaar nur noch ein Rahmenelement 10 benötigt. In diesem Fall wären die Öffnungen 21, 31 der Rahmenelemente 20, 30 von Figur 4 alle gleich groß und äquidistant auszubilden, was - neben der verringerten Anzahl von benötigten Plattenelementen - eine weitere Vereinfachung des Stackaufbaus bedeuten würde. Eine solche Weiterbildung wird daher im allgemeinen gegenüber der skizzierten Ausbildung bevorzugt.

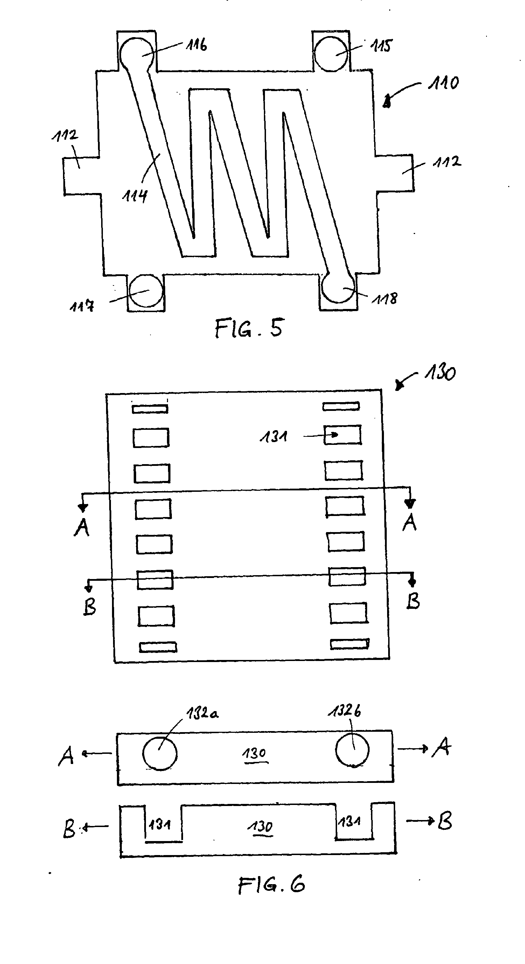

Die Figuren 5 und 6 zeigen weitere Plattenelemente und bevorzugte Ausführungsformen von entsprechend ausgebildeten erfindungsgemäßen Rahmenelementen.

Das in Figur 5 oben skizzierte Plattenelement 110 ähnelt strukturell dem in Figur 3 skizzierten Plattenelement 10, ist allerdings im Unterschied zu dem von Figur 3 einstückig ausgebildet.

Zur elektrischen Verschalung eines Stacks aus diesen Plattenelementen 110 werden dieselben Rahmenelemente 20 verwendet, wie in Figur 3 und 4 skizziert. Es unterscheidet sich ferner von dem Rahmenelement von Figur 3 darin, dass an Stelle beim Plattenelement 10 oben und unten vorgesehenen einzelnen Rippen 12 ein Paar von Rippen vorgesehen ist, die auch der Fluidführung dienen. Hierzu weist jede dieser Rippen eine Bohrung 115 bis 118 auf, die alle der Fluidführung entlang der Achse des Stacks, die Bohrungen 116 und 118 zusätzlich der Zu- bzw. Abfuhr von Fluid in den/aus dem Strömungskanal 114 dienen.

Dementsprechend ist auch das zu verwendende Rahmenelement 130, das in Figur 5 in der unteren Teilfigur in Aufsicht und in zwei Querschnitten skizziert ist, ausgebildet: es weist zwei durchgehende Bohrungen 132a und 132b in Längsrichtung (Stapelrichtung des Stacks) auf, die periodisch durch Vertiefungen 131 unterbrochen werden. Durch Einführen der Rippen des Plattenelements 110 in diese Vertiefungen 131 bilden sich entlang der Stackachse vier durchgehende Fluidkanäle aus.

Bei den Stack-Ausführungen von Fig. 3 bis 6 werden zwei unterschiedliche Rahmenelemente verwendet, die zusammen mit zwei (nicht abgebildeten) Stack-Endplatten ein Gehäuse bilden, das den Stack vollständig einschließt.

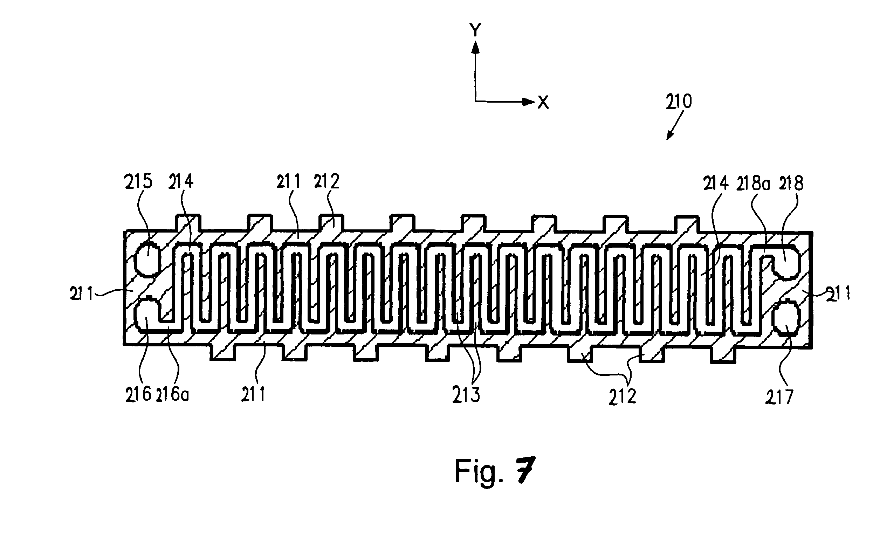

Der Aufbau monopolarer Brennstoffzellenstacks lässt sich weiter vereinfachen, wenn das Plattenelement als Laminat aus einer isolierenden Schicht und zwei leitfähigen Schichten ausgebildet ist, die die isolierende Schicht sandwichartig einbetten. Hierbei erübrigt sich die paarweise Anordnung von Plattenelementen, da ein einziges Plattenelement die beiden Elektroden (Anoden oder Kathoden) eines Anoden- oder Kathodenbereichs zweier angrenzender Einzelzellen umfassen kann. Zum Aufbau des Stacks werden einfach Elektrolyteinheiten und Plattenelemente alternierend gestapelt. Derartige Plattenelemente werden für die in den Figuren 7 bis 11 beschriebenen Beispielen verwendet. Es können aber auch die erfindungsgemäßen Plattenelemente 10 und 110 der Figuren 3 und 5 derartig ausgebildet werden, wobei eine entsprechende Anpassung der Vertiefungen 31, 131 bzw. Perforationen 21 zugehörigen Rahmenelemente zu erfolgen hat.

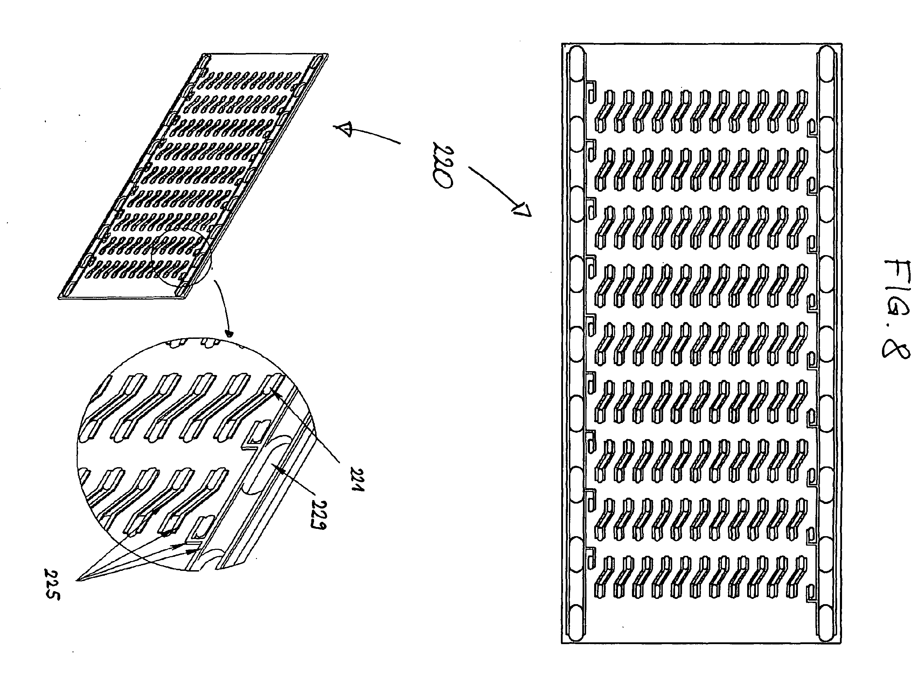

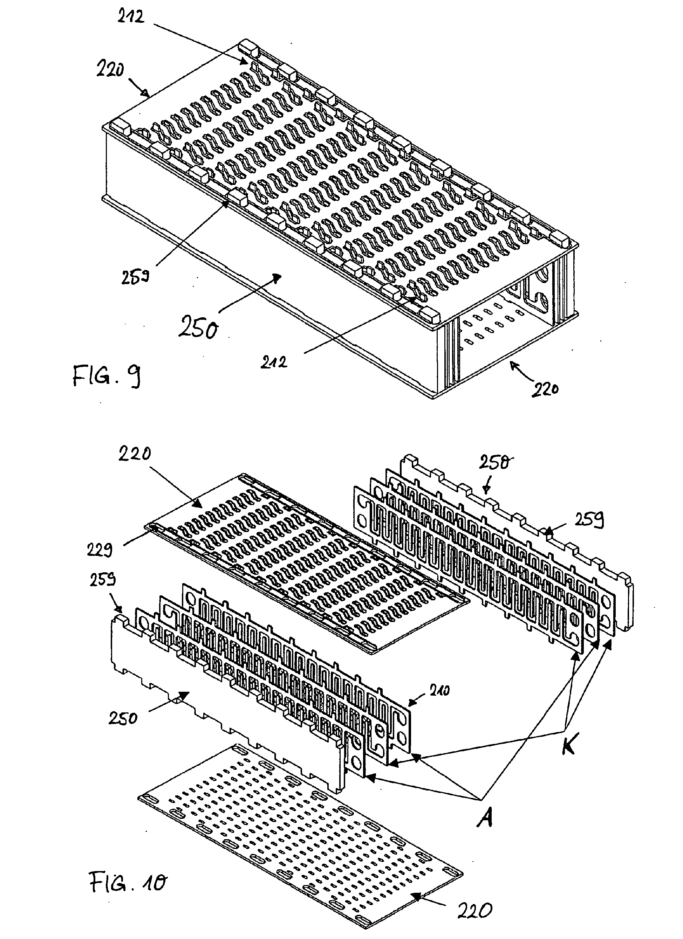

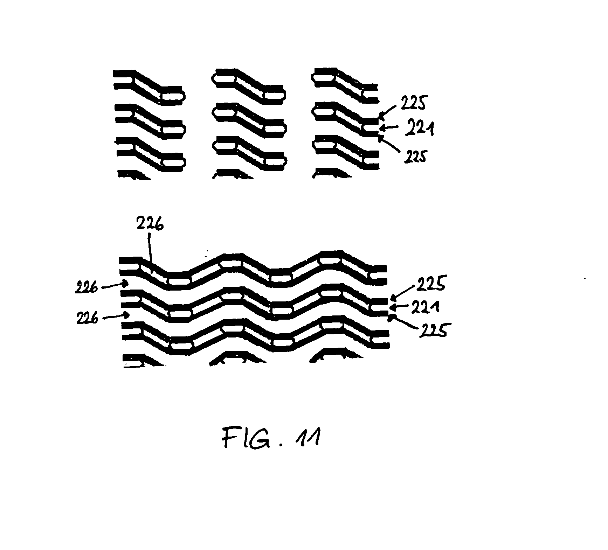

Fig. 7 zeigt ein weiteres Beispiel eines Plattenelements 210, das zusammen mit entsprechend ausgebildeten erfindungsgemäßen Rahmenelementen (→ Fig. 8) zur Ausbildung eines Monopolarstacks (→ Fig. 9, 10) gemäß den Prinzipien der vorliegenden Erfindung verwendbar ist.

Beim Plattenelement 210 sind beide Oberflächen elektrisch leitend und mittels einer nicht-leitenden, sandwich-artig eingebetteten Zwischenschicht elektrisch gegeneinander isoliert. Das Plattenelement 210 weist einen umlaufenden Rahmenbereich 211 auf, wobei sich von zwei gegenüberliegenden Seiten des Rahmenbereichs 211 nach außen Rippen 212 und nach innen Stege 213 erstrecken. Die Stege 213 erstrecken sich nicht bis zur gegenüberliegenden Rahmenseite und sind alternierend angeordnet, so dass durch die Perforationen zwischen den Stegen 213 ein mäanderförmiger Kanal 214 definiert wird. Im Rahmenbereich 211 sind ferner vier Bohrungen 215, 216, 217, 218 vorgesehen, von denen zwei diametral gegenüberliegende Bohrungen 216 und 218 über Durchbrüche 216a und 218a mit dem mäanderförmigen Kanal 214 verbunden sind.

Beim Einbau in einen Stack sind ein Teil des Rahmenbereichs 211 und die Stege 213 in elektrischem Kontakt mit der MEA und dienen zur Stromleitung. Gleichzeitig dienen die Stege 213 auch zur gleichmäßigen Fluidverteilung über die aktive Fläche und der Fluidführung über diese Fläche. Das Fluid wird über eine der beiden Bohrungen 216, 218, die über die Durchbrüche mit dem mäanderförmigen Kanal 214 verbunden sind, zugeführt, durchströmt diesen Kanal 214, und wird über die andere Bohrung wieder abgeführt. Aufgrund der geführten Strömung gibt es keine Staubereiche mit verringertem Fluidaustausch, so dass ein höherer Wirkungsgrad erzielt wird. Ferner gewährleistet die Strömungsführung eine Relativlageunabhängigkeit beim Einsatz des Stacks, d.h. eine sichere Funktion ist auch bei Seitlage oder Überkopfbetrieb gewährleistet.

In der für Monopolaranordnungen bevorzugten Ausführungsform sind die sich nach außen erstreckenden Rippen der einen Seite gegenüber den Rippen der anderen Seite so versetzt, dass beim Aneinanderlegen des gezeigten Plattenelements 210 und eines weiteren Plattenelements 210, das um 180° bzgl. der in der Figur angedeuteten x- oder y- Achse gedreht und so positioniert wird, dass die Bohrungen der beiden Plattenelemente fluchten, die Rippen der beiden Plattenelemente nicht miteinander in Berührung kommen. Bei einer Rotation des Plattenelements 210 um 180° in der Papierebene, bei der die Bohrung 217 in die Bohrung 215 übergeht (und umgekehrt) und die Bohrung 218 in die Bohrung 216 übergeht (und umgekehrt), gehen die sich nach außen erstreckenden Rippen der einen Seite nicht mit der ursprünglichen Lage der Rippen der anderen Seite in Deckung über, sondern kommen zwischen diesen in Position. Diese Konfiguration erlaubt es, für die Stromableiter des gesamten Monopolarstacks einen einzigen Typ von Plattenelement zu verwenden.

Figur 8 zeigt eine Aufsicht auf eine Ausführungsform eines erfindungsgemäßen Rahmenelements 220, das zusammen mit den in Figur 7 verwendeten Plattenelementen 210 verwendbar ist.

Das Rahmenelement 220 weist ein regelmäßiges Muster von Perforationen 221 auf, die der Aufnahme der Rippen 212 der Plattenelemente 210 von Figur 7 dienen. Auf einer Seite des Rahmenelements 220 sind Leiterbahnabschnitte 225 vorgesehen, die sich jeweils zwischen wenigstens zwei Perforationen 221 erstrecken, so dass eine monopolare Verschaltung der durch die Perforationen aufgenommenen Rippen der Plattenelemente 210 bewirkt wird. Die Vorderseite und die Rückseite einer durch die Perforation 221 durchgeführten Rippe 212 bilden jeweils Anodenanschlusskontakt (oder Kathodenanschlusskontakt). Da diese Kontaktpaare elektrisch voneinander isoliert sein müssen, ist unbedingt zu beachten, dass die entsprechenden Leiterbahnabschnitte 225 nicht miteinander leitend verbunden sind. Das Rahmenelement 220 weist ferner Öffnungen 229 auf, in die die Rippen 259 von Endplatten 250 einsetzbar sind. Wie die Figuren 9 und 10 zeigen, schließen diese Endplatten 250 den Stack beidseitig ab. In der Endplatte sind i.A. ferner Durchführungen zur Fluidzufuhr und -abfuhr vorgesehen (in der Figur nicht abgebildet).

Figur 10 zeigt den Stack von Figur 9 in Explosionsdarstellung. Beim Stackaufbau wird das in Figur 7 gezeigte Plattenelement 210 in alternierender Orientierung verwendet, um so Anodenbereiche A (mit je zwei Anoden) und Kathodenbereiche K (mit je zwei Kathoden) entsprechend der in Figur 1 unten gezeigten Zellenanordnung zu bilden.

Das in Figur 8 bis 10 gezeigte Leiterbahnenmuster, das durch die Leiterbahnabschnitte 225 gebildet wird, ist nur exemplarisch zu verstehen. Dies soll durch Figur 11 nochmals verdeutlicht werden. Das obere Teilbild entspricht hierbei einer Leiterbahnstruktur, wie sie in den Figuren 8-10 realisiert ist. Leiterbahnabschnitte 225 sind dabei paarweise vorgesehen, um zwei Perforationen 221 zu verbinden. Zur besseren Veranschaulichung sind die Leiterbahnabschnitte 225 hier schwarz eingefärbt. Wie das untere Teilbild von Figur 11 zeigt, kann sich ein einzelner Leiterbahnabschnitt 225 auch entlang der gesamten Querrichtung (senkrecht zur Stackachse) erstrecken, so dass jeweils zwei wellenförmige Leiterbahnabschnitte 225 einen durchgehenden wellenförmigen isolierenden Bereich 226 oder einen wellenförmigen isolierenden Bereich, der periodisch durch die Perforationen 221 unterbrochen wird, einschließen. Derartige Strukturen können auf einfache Weise durch Verwenden von herkömmlichen Leiterplatten und herkömmlichen Lithografieverfahren erzeugt werden, was die bislang aufwendige Verschaltung von Monopolarstacks deutlich vereinfacht.

Die Herstellung der Platten- und Rahmenelemente kann ausgehend von unstrukturierten, laminierten Platten erfolgen, deren eine Seite leitfähig und deren andere Seite isolierend ist. Bei der Verwendung solcher Laminate für die Plattenelemente lässt sich der Aufbau des Brennstoffzellenstacks vereinfachen, da keine separaten Isoliereinheiten mehr verwendet werden müssen. Die Schichtdicken der leitfähigen Schicht und einer isolierenden Schicht können die gleiche Größenordnung aufweisen. Das Laminat kann aber auch ein metallisch beschichteter Isolator oder ein isolierend beschichtetes Metall sein, bei denen die Dicke der Beschichtung deutlich kleiner als die Gesamtdicke ist. Als Laminate für die Rahmenelemente kommen insbesondere Leiterplatten in Frage, auf denen das erwünschte Verschaltungsmuster mittels lithographischer Techniken auf einfachste Weise und dabei in höchster Präzision ausgebildet werden kann.

Der Aufbau monopolarer Brennstoffzellenstacks lässt sich weiter vereinfachen, wenn das Plattenelement als Laminat aus einer isolierenden Schicht und zwei leitfähigen Schichten ausgebildet ist, die die isolierende Schicht sandwichartig einbetten. Ein solches Plattenelement stellt alleine den Anodenbereich (bzw. Kathodenbereich) von zwei benachbarter Einzelzellen dar, wobei die eine leitfähige Seite die Anode (bzw.

Kathode) der einen Zelle, die andere leitfähige Seite die Anode (bzw. Kathode) der anderen Zelle bildet.

Bei Verwendung dieser Weiterbildung werden zum Aufbau des Stacks einfach Elektrolyteinheiten und Plattenelemente alternierend gestapelt.

Allgemein stellt die vorliegende Erfindung Elemente bereit, die eine montagefreundliche und dabei platz- und gewichtsparende Konstruktion von monopolaren Brennstoffzellenstacks ermöglichen. Sie vereinfachen insbesondere die elektrische Verschaltung und verbessern gleichzeitig Eigenschaften wir Dichtigkeit, mechanische Festigkeit, etc.

Die Erfindung offenbart ein Rahmenelement, das überwiegend aus isolierendem Material besteht, in der Aufnahmeeinrichtungen (z.B. Schlitze) für die Rippen (Kontaktierungslaschen) der als Stromableiter dienenden Plattenelemente vorgesehen sind. Auf dem Rahmenelement sind elektrisch leitende Verbindungen, z.B. Leiterbahnen, so angebracht, dass diese, nachdem sie mit den Rippen der Stromableiter verlötet wurden, den monopolaren Stack elektrisch verschalten und - optional - gleichzeitig seitlich mechanisch verspannen. Der Stack wird vorzugsweise im vorgepressten Zustand verlötet. Die Vertiefungen und/oder Perforationen nehmen - gegebenenfalls unterstützt durch eine Vielzahl von Lötstellen - die Kräfte auf und konservieren diesen verpressten Zustand, der für eine zuverlässige Dichtung benötigt wird.

Die Vorteile dieser Erfindung lassen sich in drei Punkte aufgliedern:
1. Die komplizierte elektrische Verschaltung eines monopolaren Stacks wird durch die Erfindung extrem vereinfacht. Durch die auf dem Rahmenelement aufgebrachten Leiterbahnen ist die richtige Verschaltung bereits vorgegeben, so dass die Gefahr einer falschen Kontaktierung der als Stromableiterlaschen dienenden Rippen der Plattenelemente ausgeschlossen wird.
2. Durch die Kontaktierung der als Stromableiter dienenden Plattenelemente über geeignet angebrachte Leiterbahnen brauchen die als Kontaktierungslaschen fungierenden Rippen der Stromableiter keine unterschiedliche Anordnung zu haben.
   Somit können alle benötigten Plattenelemente die gleiche Geometrie haben, d.h. es wird nur ein Typ von Plattenelementen benötigt, der in unterschiedlichen Orientierungen zum Aufabu des Stacks verwendet wird. Dies eröffnet die Möglichkeit die Einheit "Stromableiter - Isolierung - Stromableiter" aus einem Verbundwerkstoff mit dem Aufbau "elektrisch leitende Fläche - isolierende Zwischenschicht - elektrisch leitende Fläche" herzustellen, ohne dass bei der elektrischen Verschaltung Probleme mit der Kontaktierung auftreten. Die Herstellung von solchen Stromableiter-Einheiten (zwei Stromableiter mit einer Isolierung dazwischen) aus einem geeigneten Verbundwerkstoff hat eine Reduzierung der Einzelteile von drei auf eins zur Folge. Dadurch wird der Montage- und Fertigungsaufwand auf ein Minimum reduziert und die Voraussetzungen für die Herstellung der Teile durch ein kostengünstiges Massenfertigungsverfahren wie z.B. Stanzen geschaffen.
3. Die für das Rahmenelement verwendete Leiterplatte kann als Verspannungselement des Stacks genutzt werden. Zusätzlich wird durch das Verlöten der Leiterbahnen mit den Kontaktierungslaschen und den Endplatten eine kraftschlüssige Verbindung hergestellt. Der Stack wird durch eine geeignete Vorrichtung zusammengepresst. Zwei Leiterplatten werden in diesem verpressten Zustand oben und unten auf den Stack aufgesetzt und verlötet. Die einzelnen Lötverbindungen nehmen nach dem Lösen der Verspannung die Kräfte auf und halten den verpressten Zustand aufrecht. Die auftretenden Zugkräfte werden von einer Vielzahl von Lötverbindungen aufgenommen, so dass die Endplatten im Vergleich zu einem verschraubten Stack sehr viel niedriger beansprucht werden. Dadurch kann die Materialstärke der Endplatten deutlich reduziert werden und so das Gesamtvolumen des Stacks bei gleicher Leistung minimiert werden.

Die vorliegende Erfindung und ihre Vorteile wurden zuletzt anhand von bevorzugten Ausführungsbeispielen erläutert. Der Schutzbereich der vorliegenden Erfindung wird aber allein durch die nachfolgenden Patentansprüche definiert.

## Patentansprüche

1. Ein Rahmenelement (20, 30; 130; 220) für einen Monopolarstack, umfassend:
eine Vielzahl von Vertiefungen (31; 131) zur Aufnahme von Rippen (12; 212) von Plattenelementen (10; 110; 210), die zu einem Stack angeordnet sind, und/oder
eine Vielzahl von Perforationen (21; 221) zur Durchführung von Rippen (12; 212) von Plattenelementen (10; 110; 210), die zu einem Stack angeordnet sind.

2. Ein Rahmenelement (20; 220) gemäß Anspruch 1 mit Perforationen (21; 221) zur Durchführung von Rippen (12; 212) der zu einem Stack angeordneten Plattenelemente (10; 210), wobei das Rahmenelement (20; 220) auf einer Seite eine bereichsweise elektrisch leitfähige Struktur (25; 225) aufweist, die eine monopolare Verschaltung der zu dem Stack angeordneten Plattenelemente (10; 210) unterstützt.

3. Ein Rahmenelement (20; 220) gemäß Anspruch 2, bei welchem die bereichsweise elektrisch leitfähige Struktur (25; 225) ein regelmäßiges Muster umfasst.

4. Ein Rahmenelement (20; 220) gemäß Anspruch 2 oder 3, umfassend:
eine Leiterplatte, auf der die bereichsweise elektrisch leitfähige Struktur (25; 225) ausgebildet ist.

5. Ein Rahmenelement (220) gemäß einem der Ansprüche 1 bis 4, umfassend:
Montageeinrichtungen (229) für zwei Endplatten (250), die den Stack von Plattenelementen (210) beidseitig abschließen.

6. Ein Rahmenelement (30; 130) gemäß einem der Ansprüche 1 bis 5, mit wenigstens einem Kanal (32a, 32b; 132a, 132b) zur Fluidführung entlang einer Stackachse des Monopolarstacks.

7. Ein Verfahren zur Herstellung eines Brennstoffzellenstacks, umfassend:
Anordnen von Plattenelementen (210) in einer Stackanordnung;
Vorspannen der Plattenelemente (210);
seitliches Aufsetzen von Rahmenelementen (220) gemäß einem der Ansprüche 1 bis 6 auf den Stack, so dass die Vertiefungen und/oder die Perforationen (221) der Rahmenelemente (220) Rippen (212) der Plattenelemente (210) aufnehmen;
Aufheben der Vorspannung.

8. Ein Verfahren nach Anspruch 7, wobei vor dem Aufheben der Vorspannung ein Verlöten der Rippen (212) der Plattenelemente (210) mit den Rahmenelementen (220) durchgeführt wird.

## Claims

1. A frame element (20, 30; 130; 220) for a monopolar stack comprising:
a plurality of recesses (31; 131) for receiving ribs (12; 212) of plate elements (10; 110; 201) arranged to form a stack, and/or
a plurality of perforations (21; 221) for passing therethrough ribs (12; 212) of plate elements (10; 110; 210) which are arranged to form a stack.

2. A frame element (20; 220) according to claim 1, comprising perforations (21; 221) for passing therethrough ribs (12; 212) of the plate elements (10; 210) arranged to form a stack, wherein the frame element (20; 220) is provided at one side with a structure (23; 225) which is electrically conductive in portions and which supports a monopolar wiring of the plate elements (10; 210) arranged to form the stack.

3. A frame element (20; 220) according to claim 2, wherein the structure (25; 225) which is electrically conductive in portions comprises a regular pattern.

4. A frame element (20; 220) according to claim 2 or 3, comprising:
a printed circuit board on which the structure (25; 225) is formed that is electrically conductive in portions.

5. A frame element (220) according to any one of claims 1 to 4, comprising:
mounting means (229) for two end plates (250) which complete the stack of plate elements (210) at both sides.

6. A frame element (30; 130) according to any one of claims 1 to 5, comprising at least one channel (32a, 32b; 132a, 132b) for fluid conduction along a stack axis of the monopolar stack.

7. A method for producing a fuel cell stack, comprising the steps of:
arranging plate elements (210) in a stack arrangement;
pre-tensioning the plate elements (210);
laterally mounting frame elements (220) according to any one of claims 1 to 6 on the stack so that the recesses and/or the perforations (221) of the frame elements (220) receive ribs (212) of the plate elements (210);
offsetting the pretension.

8. A method according to claim 7, wherein prior to the offsetting of the pretension the ribs (212) of the plate elements (210) are soldered with the frame elements (220).

## Revendications

1. Elément d'encadrement (20, 30 ; 130 ; 220) pour un assemblage monopolaire comprenant :
une pluralité de cavités (31 ; 131) pour recevoir des nervures (12 ; 212) d'éléments de plaques (10 ; 110 ; 210) qui sont disposés de manière à former un assemblage et/ou
une pluralité de perforations (21 ; 221) permettant le passage de nervures (12 ; 212) d'éléments de plaques (10 ; 110 ; 210)) qui sont disposés de manière à former un assemblage.

2. Elément d'encadrement (20 ; 220) selon la revendication 1 avec des perforations (21 ; 221) permettant le passage de nervures (12 ; 212) d'éléments de plaques (10 ; 210) qui sont disposés de manière à former un assemblage, l'élément d'encadrement (20 ; 220) comprenant sur un côté une structure (25 ; 225) dont certaines zones sont électroconductrices et qui soutient un agencement monopolaire des éléments de plaques (10 ; 210) qui sont disposés de manière à former un assemblage.

3. Elément d'encadrement (20 ; 220) selon la revendication 2, **caractérisé en ce que** la structure (25 ; 225) dont certaines zones sont électroconductrices présente un dessin régulier.

4. Elément d'encadrement (20 ; 220) selon la revendication 2 ou 3, comprenant :
une plaque conductrice sur laquelle est configurée la structure (25 ; 225) dont certaines zones sont électroconductrices.

5. Elément d'encadrement (220) selon l'une quelconque des revendications 1 à 4, comprenant :
des dispositifs de montage (229) pour deux plaques terminales (250) qui clôturent des deux côtés l'assemblage d'éléments de plaques (210).

6. Elément d'encadrement (30 ; 130) selon l'une quelconque des revendications 1 à 5, avec au moins un canal (32a, 32b ; 132a, 132b) pour le guidage d'un fluide le long d'un axe d'assemblage de l'assemblage monopolaire.

7. Procédé pour la fabrication d'un assemblage de piles à combustible comprenant :
la mise en place d'éléments de plaques (210) dans une disposition d'assemblage ;
la mise en précontrainte des éléments de plaques (210) ;
la mise en place par le côté sur l'assemblage d'éléments d'encadrement (220) selon l'une quelconque des revendications 1 à 6, de sorte que les nervures (212) des éléments de plaques (210) rentrent dans les cavités et/ou dans les perforations (221) des éléments d'encadrement (220) ;
le relâchement de la précontrainte.

8. Procédé selon la revendication 7, **caractérisé en ce qu'**une brasure des nervures (212) des éléments de plaques (210) avec les éléments d'encadrement (220) est effectuée avant le relâchement de la précontrainte.
